# EUROPÄISCHE PATENTANMELDUNG

(11) **EP 1 533 602 A2**
(43) Veröffentlichungstag der Anmeldung: **25.05.2005**
(21) Anmeldenummer: 04027391.4
(22) Anmeldetag: 18.11.2004
(51) Int. Cl.: G01M 3/22, G01M 3/28

(54) **Messverfahren und -einrichtung für CO2-Leckagen und -Permeationen**

(30) Priorität: 19.11.2003 DE 10354234
(71) Anmelder: Eaton Fluid Power GmbH, 76532 Baden-Baden (DE)
(72) Erfinder: Welle, Stefan, 76549 Hügelsheim (DE); Leisenheimer, Bert, Dr., 76689 Karlsdorf-Neuthard (DE); Ullrich, Holger, 76477 Eichesheim-Illing (DE)
(74) Vertreter: Patentanwälte Rüger, Barthelt & Abel

(57) **Zusammenfassung**

Bei einem Messverfahren zum Messen geringer CO₂-Leckagen wird ein Prüfling (2,3) in einem Prüfgefäß (4) einer Atmosphäre mit kontrollierter Zusammensetzung ausgesetzt. Vorzugsweise wird diese Atmosphäre in einem Prüfgefäß bzw. einer Messkammer erzeugt und ständig erneuert. Über eine Signalquelle (23) wird vorzugsweise lediglich kurzzeitig CO₂ in die Messkammer (4) eingeleitet und die sich ergebende Erhöhung der CO₂-Konzentration in der Messkammer mit einem Massenspektrometer (16) verfolgt. Vorzugsweise wird zur Kalibrierung dieser Vergleichsmessung dem Prüfgas in definiertem Verhältnis ein Markergas, beispielsweise Helium, beigemischt.

Die spätere Druckprüfung des Prüflings erzeugt einen CO₂-Anstieg in dem Prüfgefäß (4). Dieser wird von dem Massenspektrometer (16) erfasst. Das Signal des Massenspektrometers setzt sich aus Leckageanteilen und Hintergrundanteilen zusammen, die den Leckageanteil in der Regel weitgehend überwiegen. Wird von dem Signal der zuvor gemessene Hintergrundanteil abgezogen, bleibt der Leckageanteil übrig. Diesem wird anhand des zuvor mit der Signalquelle (23) erhaltenen Probesignals ein CO₂-Leckagewert zugeordnet.

## Beschreibung

Die Erfindung betrifft ein Verfahren zur Bestimmung von Verlustraten an Prüflingen, insbesondere zur Bestimmung von CO₂-Verlustraten sowie eine entsprechende Vorrichtung.

In der Kraftfahrzeug-Klimatechnik werden konventionelle Kältemittel zunehmend ersetzt. In der Vergangenheit ist das Kältemittel R12 durch das Kältemittel R134a ersetzt worden. Jedoch hat sich R134a als starkes Treibhausgas erwiesen. Die Bestrebungen gehen deshalb dahin, weniger klimaschädliche Kältemittel einzusetzen. Während dem Kältemittel R134a etwa die 1200fache Klimaschädlichkeit von Kohlendioxid zugesprochen wird, wird CO₂, soweit es der Natur entnommen ist, als klimaschädlich angesehen.

Klimaanlagen mit Kältemaschinen oder Wärmepumpen zum Kühlen oder Heizen von Kraftfahrzeuginnenräumen sollen möglichst wartungsfrei sein. Dies gilt auch für Klimaanlagen mit neuen oder alternativen Kältemitteln, wie beispielsweise CO₂, das in Kältemaschinen Betriebsdrücke von über 100 bar erreichen kann. Um eine wirkliche Wartungsfreiheit zu erreichen, werden Verlustraten von Einzelkomponenten angestrebt, die geringer als 1 g pro Jahr sind. Dabei wird natürlich angestrebt, diese geringe Verlustrate auch nachweisen zu können. Verlustraten sind nicht notwendigerweise konstant. Es ist auch möglich, dass z.B. bei plötzlicher Druckänderung z.B. an einer Dichtung eine Kältemittelportion ausgelassen wird. Integrierende Messverfahren lassen solche temporären Leckagen unentdeckt.

CO₂ ist in vergleichsweise hoher Konzentration allgegenwärtig. Wird z.B. die sichere Erfassung einer Verlustrate von < 1g/Jahr angestrebt entspricht die durch diese Verlustrate bei einer Messung frei gesetzte CO₂-Menge etwa 1/70.000 der in der in Umgebung ohnehin vorhandene CO₂-Menge.

Vor diesem Hintergrund ist es Aufgabe der Erfindung, ein Verfahren sowie eine Vorrichtung zum Bestimmen von Leckagen und/oder Permeationen an Prüflingen insbesondere zur Bestimmung von CO₂-Verlustraten zu schaffen.

Diese Aufgabe wird mit dem Verfahren nach Anspruch 1 und der Vorrichtung nach Anspruch 16 gelöst:

Bei dem erfindungsgemäßen Verfahren und der Vorrichtung wird der Prüfling in einem Prüfgefäß zunächst einer Atmosphäre mit definierter Zusammensetzung ausgesetzt. Die Atmosphäre kann CO₂-frei sein oder einen definierten CO₂-Gehalt aufweisen. Der Prüfling ist dabei zunächst drucklos, so dass er kein zusätzliches Prüfmedium (vorzugsweise CO₂) in die Atmosphäre einträgt. Mit einem empfindlichen Messgerät, z.B. einem Massenspektrografen, wird nun die Zusammensetzung der Atmosphäre bestimmt. Dabei lassen sich Spuren des Prüfgases nachweisen, insbesondere wenn es sich bei diesem um CO₂ handelt. Moleküle desselben haften an der Oberfläche des Prüflings, der zuvor der gewöhnlichen Erdatmosphäre ausgesetzt war. Es wird somit ein eher zufälliges Signal, das auch als Hintergrund-Rauschsignal bezeichnet werden kann, erhalten. Im nächsten Schritt wird der abgeschlossenen Atmosphäre, die den Prüfling umspült, eine definierte Menge oder ein definierter Strom des Prüfgases zugesetzt und es wird wenigstens eine weitere Messung des Prüfgasgehalts der Atmosphäre durchgeführt. Anhand der Veränderung des Signalpegels des Messgeräts gegen den vorherigen Messversuch und anhand der eingeführten Prüfgasmenge oder des eingeführten Prüfgasstroms kann nun eine Beziehung zwischen eingeführter Prüfgasmenge oder Prüfgasstrom und Signalveränderung hergestellt werden. Dieser Zusammenhang kann später als Maßstab zur Bewertung von Verlustraten des Prüflings herangezogen werden.

Im nächsten Schritt wird der Prüfling von innen her unter Prüfgasdruck gesetzt. Er gibt nun seiner Verlustrate entsprechend zusätzlich Prüfgas in die abgeschlossene Atmosphäre ab, was von dem Messgerät registriert wird. Die Größe des erhaltenen Messwerts kann nun anhand der zuvor durchgeführten Probemessung auf eine tatsächlich vorhandene Verlustrate umgerechnet werden.

Dieses Verfahren gestattet die Erfassung von Verlustraten, die geringer als 1 g/Jahr sind. Das Verfahren gestattet außerdem die Erfassung temporärer Lecks, denn es weist eine hohe zeitliche Auflösung auf. Ergeben sich beispielsweise kurzzeitige kleinere Lecks in Folge von Setzungen von O-Ringen oder sonstigen Dichtungen oder sonstigen Bewegungen des Prüflings, auch in Folge von druckverursachten Dehnungen, Druckstößen und dergleichen können diese Lecks massenspektrografisch ermittelt werden. Dazu ist an dem die abgeschlossene Atmosphäre enthaltenen Prüfgefäß eine Probeentnahmeeinrichtung vorgesehen. Diese gestattet auch unterschiedliche Drücke in der Messeinrichtung, beispielsweise dem Massenspektrografen, und dem Prüfgefäß einzustellen. Dadurch wird es möglich, Prüflinge bei Umgebungsdruck auf Leckage und/oder Permeation, d.h. ganz allgemein auf ihre Verlustrate zu prüfen, was insbesondere bei Kunststoffschläuchen und ähnlichen Elementen von Bedeutung ist.

Bei einer ersten Ausführungsform enthält die abgeschlossene Atmosphäre ein Inertgas ohne Prüfgas. Es muss dann davon ausgegangen werden, dass der betreffende Prüfling zunächst ausgast, d.h. oberflächliche CO₂-Anhaftungen freisetzt, die z.B. exponentiell abklingen. Dieser Abklingvorgang kann relativ lange dauern. Zu einem Abklingen kommt es insbesondere, wenn die abgeschlossene Atmosphäre kontrolliert durchspült wird, indem ständig Inertgas zugeführt und ständig ein Teil der Atmosphäre abgepumpt wird. Das Durchspülen der abgeschlossenen Atmosphäre, d.h. des Prüfgefäßes wird als vorteilhaft angesehen, weil dadurch eine gute zeitliche Auflösung des CO₂-Eintrags erreicht werden kann, der durch die Verlustrate des Prüflings verursacht wird. Schon während des Abklingvorgangs können Probeinjektionen von Prüfgas vorgenommen werden, um deren Auswirkung auf das Messsignal zu registrieren. Danach kann eine Messung vorgenommen werden. In einer Auswerteeinrichtung wird dann unter Zugrundelegung der gemessenen Abklingkurve und der wenigstens einen Probemessung der Messwert für die Verlustrate nach dem Druckbeaufschlagen des Prüflings bestimmt.

Bei einer bevorzugten Ausführungsform wird der Inertgasatmosphäre ein Prüfgasanteil zugesetzt, der das vom Konzentrationsgefälle getriebene Ausgasen von Prüfgas, insbesondere CO₂, aus dem Prüfkörper oder von dessen Oberfläche eindämmt. Das Eindämmen kann bedeuten, dass es vollständig zum Erliegen gebracht wird oder dass das Ausgasen auf eine konstante Rate geführt wird. In beiden Fällen ergibt sich ein konstanter Prüfgashintergrund (CO₂-Hintergrund) für die späteren Messungen.

Weiter wird bevorzugt, dem probeweise injizierten CO₂ einen Marker, z.B. Helium, in bekanntem Mischungsverhältnis zuzusetzen, um die Größe der Änderung des CO₂-Signals S1 anhand eines Helium-Signals S2 auf die eingeleitete CO₂-Menge oder den CO₂-Strom normieren zu können.

Einzelheiten vorteilhafter Ausführungsformen der Erfindung sind Gegenstand der Beschreibung, der Zeichnung oder von Ansprüchen. In der Zeichnung ist ein Ausführungsbeispiel der Erfindung veranschaulicht. Es zeigen:
- Figur 1: eine Vorrichtung zum Bestimmen von Verlustraten an Prüflingen in schematischer Darstellung,
- Figur 2 bis 4: verschiedene zeitliche Verläufe eines Messsignals bei der Verlustratenmessung jeweils als Diagramm und
- Figur 5: Eine Vorrichtung zum Bestimmen von Verlustraten an Prüflingen in abgewandelter Ausführungsform in schematischer Darstellung.

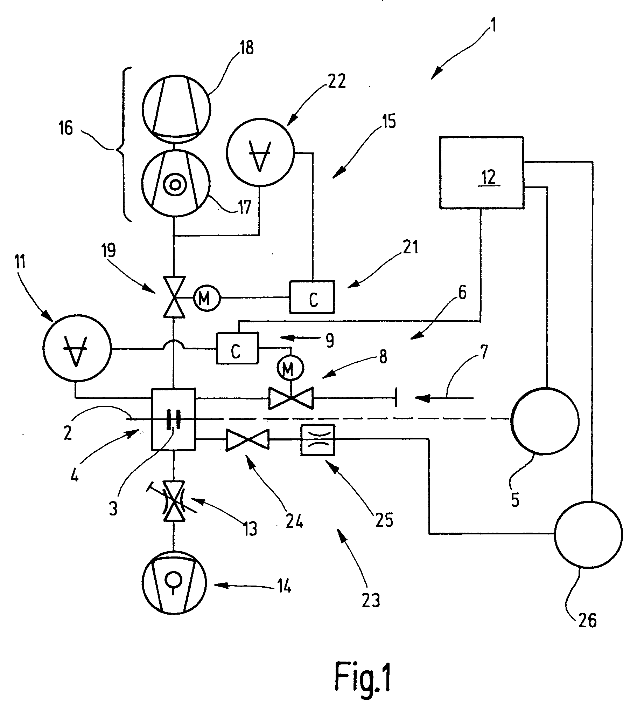

In Figur 1 ist eine Messeinrichtung 1 veranschaulicht, die dazu dient, die CO₂-Leckrate eines Prüflings 2 zu bestimmen. Der Prüfling 2 ist beispielsweise ein Schlauch, ein Aggregat oder eine sonstige Komponente einer Wärmepumpe oder einer Kältemaschine. Bei dem in Figur 1 veranschaulichten Beispiel handelt es sich bei dem Prüfling 2 um eine Flanschverbindung 3. Der Prüfling 2 ist von einem Prüfgefäß 4 aufgenommen, das eine von der Umgebung abgeschlossene Atmosphäre enthält. Wenigstens ein Ende, vorzugsweise beide Enden des Prüflings 2 ragen durch entsprechende Durchführungsdichtungen aus dem Prüfgefäß 4 heraus. Sie können somit von außen mittels einer CO₂-Quelle 5 gezielt mit Prüfgas, d.h. CO₂, beaufschlagt werden.

Dem Prüfgefäß 4 ist eine Gaszuführungseinrichtung 6 zugeordnet, über die dem Prüfgefäß 4 eine Atmosphäre definierter Zusammensetzung zuführbar ist. Zu der Gaszuführungseinrichtung 6 gehört eine durch einen Pfeil 7 veranschaulichte Gasquelle, die ein Inertgas, wie beispielsweise Stickstoff oder synthetische Luft, d.h. ein Luft-Stickstoff-Gemisch definierter Zusammensetzung oder auch ein Trägergas, wie Stickstoff oder synthetische Luft versetzt mit definierten Anteilen CO₂ bereitstellt. Zu der Gaszuführungseinrichtung 6 gehört außerdem ein gesteuertes Ventil 8, das von einer Steuereinheit, die an einem mit dem Prüfgefäß 4 verbundenen Drucksensor 11 angeschlossen ist, kontrolliert wird. Beispielsweise wird der Innendruck in dem Prüfgefäß 4 einem Vorgabesignal entsprechend konstant gehalten. Das Vorgabesignal kann von einer übergeordneten Steuereinrichtung 12 vorgegeben sein.

An das Prüfgefäß 4 ist außerdem ein einstellbares Drosselventil 13 angeschlossen, das zu einer Vakuumpumpe 14 führt. Damit wird ein möglichst konstanter Gasstrom aus der Prüfkammer 4 abgezogen, so dass die ansonsten abgeschlossene Atmosphäre der Prüfkammer 4 von dem bereit gestellten Inertgas bei konstantem Druck durchströmt wird.

An das Prüfgefäß 4 ist außerdem eine Probenentnahmeeinrichtung 15 angeschlossen, die aus dem Prüfgefäß 4 entnommene Gasproben in einen kontinuierlichen oder diskontinuierlichen Strom einem Massenspektrometersystem 16 zuführt. Dieses enthält ein Massenspektrometer 17 und eine nachgeschaltete Vakuumpumpe 18. Das Massenspektrometer 17 liefert über eine nicht weiter veranschaulichte Signalübertragungseinrichtung Signale an die übergeordnete Steuereinrichtung 12, die auch als Auswerteeinrichtung dient. Die Signale kennzeichnen die Anteile unterschiedlicher, anhand ihres Molekülgewichts getrennter Stoffe in dem zugeführten Gas.

Die Probenentnahmeeinrichtung 15 weist ein Ventil 19 auf, das das Prüfgefäß 4 mit dem Spektrometer 17 verbindet. Das Ventil 19 ist von einer Steuereinheit 21 kontrolliert, die ihrerseits an einen Drucksensor 22 angeschlossen ist, der den Eingangsdruck des Massenspektrometers 17 erfasst. Die Probenentnahmeeinrichtung 15 arbeitet als Regelschleife, die den Eingangsdruck des Massenspektrometers auf einen eingestellten Wert zwischen 10⁻⁶ und 10⁻⁸ Millibar konstant hält.

Zu der Messeinrichtung 1 gehört außerdem eine Signalquelle 23, die durch eine Einrichtung zum Einleiten geringer definierter Prüfgasströme in das Prüfgefäß 4 gebildet wird. Zu der Signalquelle 23 gehört ein Ventil 24, das über eine nicht weiter veranschaulichte Verbindung von der Steuereinrichtung 12 gesteuert werden kann und dem über eine Drossel 25 Prüfgas, z.B. CO₂, zugeführt werden kann, das von einer bedarfsweise von der Steuereinrichtung 12 gesteuerten Quelle 26 kommt. Die Quelle 26 gibt in einem ersten Beispiel reines CO₂ und in einem zweiten Beispiel mit einem Marker, beispielsweise Helium, versetztes CO₂ ab.

Die insoweit beschriebene Messeinrichtung 1 arbeitet wie folgt:

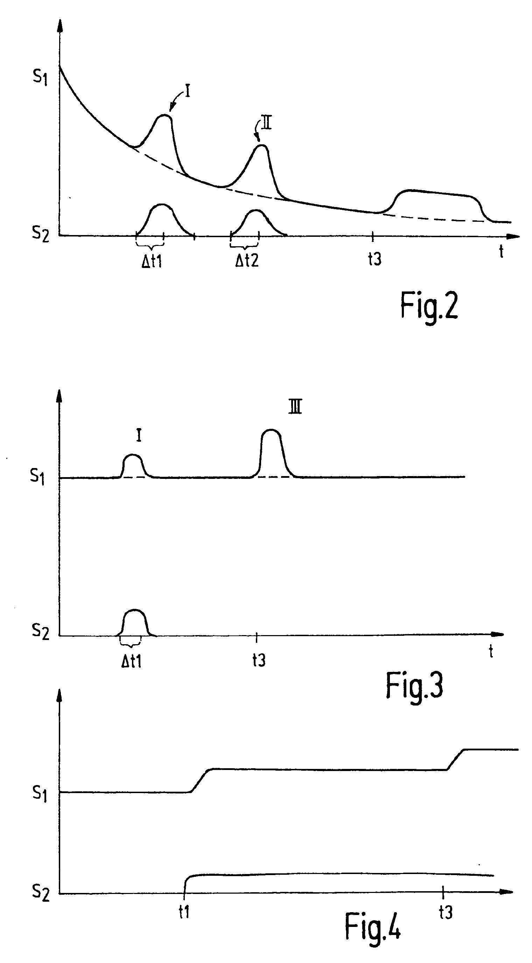

Zur Bestimmung der Leckrate der Flanschverbindung 3 des Prüflings 2 wird dieser zunächst in das Prüfgefäß 4 eingesetzt, wobei seine Enden abgedichtet aus dem Prüfgefäß 4 herausragen. Es wird dann in dem Prüfgefäß eine Atmosphäre mit vorgegebenem Druck aufgebaut, indem zunächst die Vakuumpumpe 14 eingeschaltet und die Gaszuführungseinrichtung 6 aktiviert werden. Die CO₂-Quelle 5 ist hingegen inaktiv. Es stellt sich dann in dem Prüfgefäß der gewünschte Druck, beispielsweise Umgebungsdruck oder auch ein abgesenkter Druck ein. Über die Gaszuführungseinrichtung 6 strömt dem Prüfgefäß 4 Gas mit kontrollierter Zusammensetzung, beispielsweise reiner Stickstoff, zu. An der Oberfläche des Prüflings 2 kann CO₂ in geringeren Mengen gebunden sein. Außerdem kann CO₂ in die Oberfläche des Prüflings eindiffundiert sein, insbesondere wenn es sich um Schläuche aus Polymer oder ähnlichem Material handelt. Solche CO₂-Anhaftungen können während der Lagerung des Prüflings 2 an der freien CO₂-haltigen Atmosphäre entstehen. Dieses CO₂ tritt aufgrund des Druck- und/oder Konzentrationsunterschieds nun in die Atmosphäre in dem Prüfgefäß 4 über. Dabei erschöpft sich der oberflächlich oder in der Matrix des Prüflings 2 gebundene CO₂-Vorrat allmählich. Es ergibt sich deshalb in Folge der ständigen Durchspülung des Prüfgefäßes 4 ein allmählicher Abfall der CO₂-Konzentration in dem Prüfgefäß 4. Die Probenentnahmeeinrichtung 5 entnimmt ständig oder in Zeitabständen Gasportionen aus dem Prüfgefäß und führt dieses Gas dem Massenspektrometer 17 zur Analyse zu. Dieses erzeugt für das erfasste CO₂ ein erstes Signal S1, das in Figur 2 zunächst als abfallende E-Funktion veranschaulicht ist. Diese Kurve wird verfolgt und von der übergeordneten Steuereinrichtung, die zugleich als Auswerteeinrichtung dient, punktweise oder kontinuierlich registriert. Der Prüfling 2 ist während dieses Prozesses von innen her nicht mit CO₂ beaufschlagt. Z.B. kann er mit Stickstoff, mit Umgebungsdruck, mit abgesenktem Druck oder erhöhtem Druck gefüllt sein. Vorzugsweise ist sein Innendruck gleich dem in dem Prüfgefäß 4 herrschenden Druck. Es ist jedoch auch möglich, ihn bereits mit Prüfgas zu füllen, den Druck aber in Übereinstimmung mit dem Innendruck des Prüfgefäßes 4 festzulegen, so dass druckgetriebene Verluste Null sind.

Es wird nun die Signalquelle 23 ein-, zwei- oder mehrmals aktiviert. In Figur 2 ist eine zweimalige Aktivierung veranschaulicht. Aktivierung bedeutet, dass die Quelle 26 definierte Mengen oder definierte Ströme Prüfgas, d.h. hier vorliegend CO₂, in das Prüfgefäß 4 einleitet. Das Massenspektrometer 17 registriert diese Aktivierungen der Signalquelle 23 als Peaks I, II. Die Größe der Peaks oberhalb der registrierten E-Funktion kann mit der in das Prüfgefäß 4 eingeführten Prüfgasmenge oder dem Prüfgasstrom ins Verhältnis gesetzt werden. In Figur 2 ist die Signalquelle 23 jeweils für kurze Zeiträume Δt1, Δt2 aktiviert.

Zur eigentlichen Messung der Leckage wird nach Abschalten der Signalquelle 23 und Abklingen der entsprechenden Reaktion des Massenspektrometers der Prüfling 2 mit Prüfgas beaufschlagt. Dazu wird die CO₂-Quelle 5 aktiviert. Der Prüfling 2 wird mit CO₂ geflutet und unter Prüfdruck gesetzt. Dies geschieht zu einem Zeitpunkt t3. Die vorhandene Leckage erhöht die CO₂-Konzentration in dem Prüfgefäß 4. Entsprechend wird der CO₂-Pegel angehoben, d.h. im einfachsten Fall wird die noch immer abklingende E-Funktion parallel nach oben versetzt. Die Größe dieses Parallelversatzes des Signals S1 kann nun anhand der zuvor durch die Signalquelle 23 erzeugten Peaks I, II quantitativ bewertet werden. Dies nimmt die Steuereinrichtung 12 in ihrer Funktion als Auswerteeinrichtung vor. Z.B. setzt sie die Größe des Signals nach t3 ins Verhältnis mit der Größe der Peaks I und II und bildet daraus die Verlustrate.

Bei einer verfeinerten Ausführungsform leitet die Signalquelle 23 nicht reines Prüfgas (CO₂) sondern mit einem Marker versetztes Prüfgas in das Prüfgefäß 4 ein. Beispielsweise handelt es sich um CO₂, das mit geringen Heliummengen definiert versetzt ist. Hingegen ist Helium ansonsten in der Atmosphäre des Prüfgefäßes 4 nicht vorhanden. Der Prüfling 2 hat in der Regel auch keine Heliumanhaftungen an seiner Oberfläche und auch kein in seinen Dichtungen oder sonstigen Gummiteilen gelöstes Helium. Das Massenspektrometer 17 liefert deshalb für den Heliumanteil der Atmosphäre des Prüfgefäßes 4 ein Signal S2, das normalerweise Null ist. Lediglich während des wenigstens einen Prüfzykluses (in Figur 2 zwei Prüfzyklen) leitet der Signalgeber 23 mit Helium versetztes CO₂ in das Prüfgefäß 4 ein, so dass sich an dem Massenspektrometer 17 für das Heliumsignal S2 zwei entsprechende Peaks ergeben. Anhand der Größe dieser Peaks kann ohne Erfassung des zeitlichen Verlaufs des CO₂-Hintergrundsignals (E-Funktion in Figur 2) eine Kalibrierung der Peaks I, II für das CO₂-Signal vorgenommen werden. Diese ist dann wiederum maßgeblich für die Bewertung der Größe des nach t3 erhaltenen Messsignals. Es ist auch möglich, vor dem Kalibrieren der CO₂-Messung zunächst den Signalgeber 23 zu kalibrieren. Dazu kann dieser z.B. mit Helium beaufschlagt und der Heliumstrom gemessen werden. Durch Berücksichtigung der bekannten Viskositäten von Helium und CO₂ kann dann aus dem gemessenen Heliumfluss der entsprechende CO₂-Fluss berechnet werden.

In Figur 3 ist der sich ergebende Zeitverlauf der Signale S1, S2 für ein Prüfverfahren angegeben, bei dem in dem Prüfgefäß 4 von vornherein eine CO₂-haltig Atmosphäre, d.h. eine prüfgashaltige Atmosphäre, aufgebaut wird. Die Gaszuführungseinrichtung 6 führt dem Prüfgefäß 4 beispielsweise ein Gemisch aus Stickstoff und CO₂ mit einem CO₂-Anteil von z.B. zwischen ein ppm und fünf ppm zu. Der CO₂-Anteil ist so groß, dass er die CO₂-Abgabe des Prüflings durch Freisetzung oberflächlich gebundenen CO₂s mindert oder unterdrückt oder zumindest auf eine geringe zeitlich konstante Rate absinken lässt. Aufgrund der konstanten Durchströmung des Prüfgefäßes 4 mit der Prüfatmosphäre (Stickstoff mit geringem CO₂-Anteil) entsteht somit an dem Massenspektrometer17 ein zeitlich konstantes CO₂-Hintergrundsignal S1. Für einen festgelegten Zeitraum Δt1 wird nun die Signalquelle 23 aktiviert, wobei der Prüfling 2 nicht mit CO₂ geflutet ist oder zumindest keinen Innendruck aufweist. Es ergibt sich wiederum ein Peak I in dem CO₂-Signal S1 des Massenspektrometers 17. Ist die in das Prüfgefäß 4 eingetragene CO₂-Menge oder der CO₂-Strom bekannt, kann die Größe dieses Peaks zur Bewertung der späteren Messung herangezogen werden. Ist die eingetragene Menge oder der eingetragene Strom jedoch quantitativ nicht exakt bekannt, kann eine Heliumdotierung des von der Signalquelle 23 abgegebenen Prüfgasstroms zur weiteren Kalibrierung herangezogen werden. Es entsteht das in Figur 3 veranschaulichte Heliumsignal S2 an dem Massenspektrometer 17 während der Aktivierung der Signalquelle 23. Aufgrund der Größe des Heliumsignals S2 und des sich im Wesentlichen gleichzeitig ergebenden CO₂-Signals S1 und dem bekannten CO₂-/Helium-Verhältnis des von der Signalquelle 23 abgegebenen Gases kann der Größe des Peaks I eine CO₂-Menge zugeordnet werden. Zu einem Zeitpunkt t3 wird dann der Prüfling unter Prüfdruck gesetzt. Die sich ergebenden Leckage erzeugt an dem Massenspektrografen 17 einen Peak III in dem CO₂-Signal S1. Aus der Größe dieses Peaks kann anhand der zuvorigen Probemessung mit dem Gas der Signalquelle 23 die Größe der Leckage quantitativ bestimmt werden.

Figur 4 veranschaulicht eine weitere Ausführungsform der Erfindung, bei der zu einem Zeitpunkt t1 der Signalgenerator 23 aktiviert wird. Falls mit einer Heliumdotierung gearbeitet wird, entsteht zu diesem Zeitpunkt das Heliumsignal S2, dessen Größe ein Maß für den in das Prüfgefäß 4 eingetragenen CO₂-Strom ist. Wird zu einem Zeitpunkt t3 dann der Prüfling mit Prüfdruck beaufschlagt, steigt das von dem Massenspektrometer 17 ermittelte CO₂-Signal S1 nochmals an. Aus der Größe der Anstiege des Signals S1 zu dem Zeitpunkt t1 und t3 kann wiederum die Leckrate errechnet werden. Die vorgestellten Verfahren eignen sich zur Bestimmung von Messraten von bis zu 0,05 g/Jahr.

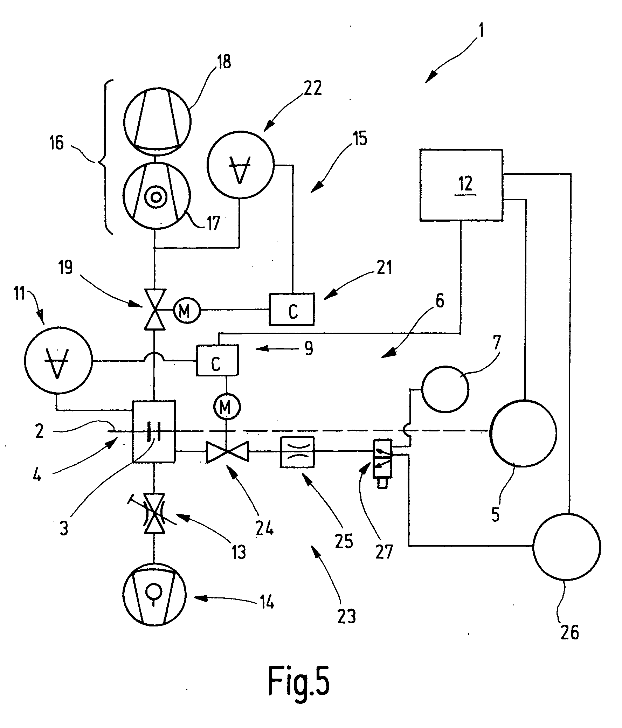

In Figur 5 ist eine abgewandelte Ausführungsform einer Messeinrichtung 1 veranschaulicht, die weitgehend mit der Messeinrichtung 1 nach Figur 1 übereinstimmt. Es wird deshalb unter Zugrundelegung gleicher Bezugszeichen sowohl hinsichtlich des Aufbaus als auch hinsichtlich möglicher Betriebsarten auf die vorstehende Beschreibung verwiesen. Ergänzend gilt folgendes:

Die Signalquelle 23 dient nunmehr nicht allein zum Einleiten von Prüfgas, z.B. CO₂, in das Prüfgefäß 4 sondern auch zur Einleitung des Inertgas, wie beispielsweise Stickstoff. Dazu ist die Steuereinheit 9 mit einem Stellmotor verbunden, der das Ventil 24 steuert, um Stickstoff oder CO₂-Einleitung in das Prüfgefäß 4 zu dosieren. Vor der Drossel 25 ist ein Wegeventil angeordnet, das als Umschaltventil dient. Es verbindet den Eingang der Drossel 25 alternativ mit der CO₂-Quelle 26 oder der Stickstoff-Quelle 7. Der wesentliche Vorteil dieser Anordnung liegt darin, dass ein vollständiges Abschalten der Signalquelle 23, d.h. des gezielten CO₂-Eintrags in das Prüfgefäß 4 auf einfachere Weise möglich ist. Das Ventil 24 muss zum Abschalten der Signalquelle 23 nicht geschlossen werden, sondern wird vielmehr nach Umschalten des Umschaltventils 27 von Stickstoff durchspült. Es ist somit nicht zu befürchten, dass CO₂ Gummidichtungen z.B. am Ventilverschlussglied des Ventils 24 durchwandert und bei abgeschalteter Signalquelle 23 dennoch in das Prüfgefäß 4 gelangt.

Bedarfsweise kann das Ventil 8 als Bypass für die Drossel 25 und das Ventil 24 vorgesehen sein, wenn die Bemessung unterschiedlicher Gasströme für die CO₂-Injektion und für die Stickstoffspülung des Prüfgefäßes 4 dies erfordert.

Eine weitere Ausführungsform der Erfindung beruht auf Figur 1. Zur Unterstützung der Abdichtung des Ventils 24 und um zu verhindern, dass CO₂-Leckagen desselben einen unerwünschten CO₂-Eintrag in die Prüfkammer 4 verursachen, kann die Steuereinrichtung 12 die CO₂-Quelle 26 steuern. Die Steuerung geht dahin, dass die zwischen dem Ventil 24 und der Quelle 26 gelegene Leitung drucklos gemacht oder unter Unterdruck gesetzt werden kann. Wenn die zu dem Ventil 24 führende Leitung nach dem Schließen des Ventils unter Vakuum gesetzt wird, werden auch die in dem Ventil 24 vorhandenen Dichtungen nicht mehr von CO₂ durchdrungen.

Alternativ ist es möglich, die Leitung zwischen der Quelle 26 und dem Ventil 24 nach dem Schließen des Ventils 24 mit Stickstoff zu spülen, um auf diese Weise einen unerwünschten CO₂-Eintrag in die Prüfkammer 4 zu verhindern. Dies kann beispielsweise mittels einer durch ein Ventil gesteuerten Verbindungsleitung zwischen der zu dem Ventil 8 führenden Leitung und der zwischen dem Ventil 24 und der Quelle 26 angeordneten Leitung erfolgen. Die Beaufschlagung oder Spülung des stromaufwärtigen Endes des Ventils 24 mit Stickstoff verhindert CO₂-Diffusionen durch Elastomerdichtungen des Ventils 24 hindurch oder bringt diese zum Erliegen.

Bei einem Messverfahren zum Messen geringer CO₂-Leckagen oder Permeation wird ein Prüfling in einem Prüfgefäß einer Atmosphäre mit kontrollierter Zusammensetzung ausgesetzt. Vorzugsweise wird diese Atmosphäre in einem Prüfgefäß bzw. einer Messkammer erzeugt und ständig erneuert. Über eine Signalquelle 23 wird vorzugsweise lediglich kurzzeitig CO₂ in die Messkammer eingeleitet und die sich ergebende Erhöhung der CO₂-Konzentration in der Messkammer mit einem Massenspektrometer verfolgt. Vorzugsweise wird zur Kalibrierung dieser Vergleichsmessung dem Prüfgas in definiertem Verhältnis ein Markergas, beispielsweise Helium, beigemischt.

Die spätere Druckprüfung des Prüflings 2 erzeugt einen CO₂-Anstieg in dem Prüfgefäß 4. Dieser wird von dem Massenspektrometer 17 erfasst. Das Signal des Massenspektrometers setzt sich aus Leckageanteilen und Hintergrundanteilen zusammen, die den Leckageanteil in der Regel weitgehend überwiegen. Wird von dem Signal der zuvor gemessene Hintergrundanteil abgezogen, bleibt der Leckageanteil übrig. Diesem wird anhand des zuvor mit der Signalquelle 23 erhaltenen Probesignals ein CO₂-Leckagewert zugeordnet. Die Messeinrichtung und das Messverfahren eignen sich auch zur Bestimmung von Verlustraten anderer Gase. Die Erfindung ist nicht auf die Bestimmung von CO₂-Verlustraten beschränkt.

## Patentansprüche

1. Verfahren zum Bestimmen von Leckagen an Prüflingen (2), insbesondere zur Bestimmung von _{CO2}-Leckagen, wobei bei dem Verfahren der drucklose Prüfling (2) in eine Atmosphäre bekannter Zusammensetzung verbracht und nach Aktivierung einer Signalquelle (23), die Prüfmedium definiert in die Atmosphäre einleitet, ein Messsignal an einer angeschlossene Messeinrichtung (17) erzeugt wird, wonach dann nach Abschalten der Signalquelle (23) und nach Druckbeaufschlagung des Prüflings (2) mit Prüfmedium und mit Prüfdruck ein weiteres Messsignal erzeugt wird, wonach die Leckrate durch Vergleich der beiden Messsignale gewonnen wird.

2. Verfahren nach Anspruch 1, wobei das Verfahren folgende Schritte umfasst:
der Prüfling (2) wird ohne mit dem auf Leckage zu prüfenden Prüfmedium gefüllt zu sein in eine abgeschlossene Umgebung eingebracht,
in der abgeschlossenen Umgebung wird eine Atmosphäre definierter Zusammensetzung aufgebaut,
wenigstens eine der abgeschlossenen Umgebung entnommene Gasprobe wird in einem Messvorgang massenspektrografisch untersucht,
in die Atmosphäre der abgeschlossenen Umgebung wird durch die Signalquelle (23) eine definierte Menge oder ein definierter Strom des Prüfmediums eingebracht, auf dessen Leckstrom der Prüfling (2) zu untersuchen ist, wenigstens eine der abgeschlossenen Umgebung entnommene Gasprobe wird in einem zweiten Messvorgang massenspektrografisch untersucht,
der Prüfling (2) wird mit dem Prüfmedium gefüllt und unter Prüfdruck gesetzt,
wenigstens eine der abgeschlossenen Umgebung entnommene Gasprobe wird in einem dritten Messvorgang massenspektrografisch untersucht, und
der Leckstrom wird aus dem Verhältnis zwischen dem Ergebnis des zweiten Messvorgangs und dem Ergebnis des dritten Messvorgangs bestimmt.

3. Verfahren nach Anspruch 1, **dadurch gekennzeichnet, dass** das Prüfmedium CO₂ ist.

4. Verfahren nach Anspruch 1, **dadurch gekennzeichnet, dass** die Atmosphäre eine Inertgasatmosphäre ist.

5. Verfahren nach Anspruch 1, **dadurch gekennzeichnet, dass** die Atmosphäre aus Stickstoff besteht oder synthetischer Luft besteht.

6. Verfahren nach Anspruch 1, **dadurch gekennzeichnet, dass** das von der Signalquelle (23) eingebrachte Prüfmedium einen Marker enthält.

7. Verfahren nach Anspruch 1, **dadurch gekennzeichnet, dass** die Atmosphäre einen festgelegten Anteil des Prüfmediums enthält.

8. Verfahren nach Anspruch 7, **dadurch gekennzeichnet, dass** der Anteil zwischen 1 und 5 ppm liegt.

9. Verfahren nach Anspruch 1, **dadurch gekennzeichnet, dass** die Atmosphäre während des gesamten Prüfzyklusses unter konstantem Druck gehalten wird.

10. Verfahren nach Anspruch 9, **dadurch gekennzeichnet, dass** der Druck bei 1 bar liegt.

11. Verfahren nach Anspruch 9, **dadurch gekennzeichnet, dass** der Druck zwischen 10⁻⁶ mbar und 1 bar liegt.

12. Verfahren nach Anspruch 9, **dadurch gekennzeichnet, dass** der Druck zwischen 10⁻³ mbar und 100 mbar liegt.

13. Verfahren nach Anspruch 1 oder 2, **dadurch gekennzeichnet, dass** die Differenz zwischen dem Messsignal mit aktivierter Signalquelle und dem Messsignal mit deaktivierter Signalquelle (23) als Bezugssignal zur Bewertung des Messignals verwendet wird, das nach Druckbeaufschlagung des Prüflings erhalten wird.

14. Verfahren nach Anspruch 1 oder 2, **dadurch gekennzeichnet, dass** die Signalquelle (23) zur Gewinnung eines Bezugssignals mehrmals aktiviert wird.

15. Verfahren nach Anspruch 1 oder 2, **dadurch gekennzeichnet, dass** die Signalquelle (23) zur Gewinnung eines Referenzsignals mehrmals aktiviert mit unterschiedlicher Stärke wird.

16. Einrichtung zur Bestimmung der _{CO2}-Leckrate von Bauteilen,
mit einem Prüfgefäß (4), das eine abgeschlossene Umgebung für den Prüfling (2) bildet und in das dieser einbringbar ist, wobei das Prüfgefäß (4) wenigstens eine abgedichtete Durchführungseinrichtung aufweist, durch die der Prüfling (2) von außen mit Prüfmedium beaufschlagbar ist,
mit einer Gaszuführungseinrichtung (6), die an das Prüfgefäß (4) angeschlossen und durch die in dem Prüfgefäß (4) eine Atmosphäre definierter Zusammensetzung aufbaubar ist,
mit wenigstens einer Probeentnahmeeinrichtung (15), die an das Prüfgefäß (4) angeschlossen ist und durch die wenigstens eine dem Prüfgefäß (4) entnommene Gasprobe einem Massenspektrometer (17) zur Untersuchung zuführbar ist,
mit einer Signalquelle (23), die an das Prüfgefäß (4) angeschlossen ist um der in diesem enthaltenen Atmosphäre eine Menge oder ein Strom des Prüfmediums zuzuführen, auf dessen Leckstrom der Prüfling (2) zu untersuchen ist, und
mit einer Auswerteeinrichtung (12), die an die Signalquelle (23), an die Gaszuführungseinrichtung (6) und an den Massenspektrografen (17) angeschlossen ist.
